# FASCICULE DE BREVET EUROPEEN

(11) **EP 2 081 780 B1**
(45) Date de publication et mention de la délivrance du brevet: **27.01.2010**
(21) Numéro de dépôt: 07848330.2
(22) Date de dépôt: 18.09.2007
(51) Int. Cl.: B60C 23/04

(54) **DISPOSITIF DE FIXATION MECANIQUE SUR JANTE D'UN CAPTEUR POUR PNEUMATIQUES**
VORRICHTUNG ZUR MECHANISCHEN BEFESTIGUNG EINES REIFENSENSORS AN EINEM GEHÄUSE
DEVICE FOR MECHANICALLY FASTENING A TYRE SENSOR TO A RIM

(30) Priorité: 23.10.2006 FR 0654455
(43) Date de publication de la demande: 29.07.2009
(73) Titulaire: LDL Technology, 31520 Ramonville Saint Agne (FR)
(72) Inventeur: LUCE, Dominique, 31000 Toulouse (FR)
(74) Mandataire: Thurgood, Alexander John
(86) Numéro de dépôt international: PCT/FR2007/051958
(87) Numéro de publication internationale: WO 2008/050013

(56) Documents cités:
- DE-A1- 10 142 354
- DE-U1- 20 110 759
- FR-A1- 2 876 322
- US-A1- 2004 155 763
- US-A1- 2005 087 007
- US-B1- 6 805 000

## Description

### DOMAINE D'APPLICATION DE L'INVENTION

La présente invention a trait au domaine des capteurs logés dans les pneumatiques et notamment aux adaptations permettant de les accueillir et de les maintenir en position dans les meilleures conditions.

### DESCRIPTION DE L'ART ANTÉRIEUR

Il existe aujourd'hui des capteurs de pression et de température suffisamment compacts pour être logés dans un pneumatique tels ceux montés sur une automobile.

Un tel dispositif est décrit, par example, dans le brevet US 6,805,000 B1.

Les modes de fixation mécanique de ces capteurs sont variés et font appel à trois techniques principales qui sont :
- le cerclage d'un boîtier contenant l'électronique des capteurs sur la jante, le boîtier se retrouvant plaqué dans le fond de jante par une ceinture le plus souvent métallique, le pneumatique renfermant ainsi ce cerclage et cette électronique,
- la fixation d'un boîtier directement sur une paroi de la jante par perçage ou encollage de la jante,
- la fixation d'un boîtier par l'intermédiaire du trou de valve et de la valve elle-même.

La plupart des solutions utilisant la dernière technique voit des contraintes tangentielles apparaissant à l'accélération et à la décélération des véhicules constituer une source de fatigue majeure pour le joint d'étanchéité participant au montage.

Une solution à ce problème est décrite dans le document FR 2876322 qui propose un montage d'un boîtier de détection à l'intérieur d'un pneumatique du type de celui venant se fixer au corps d'une valve et comprenant les éléments suivants :
- un boîtier de détection accueillant des composants de détection,
- un corps de valve,
- un moyen d'étanchéité de type joint venant assurer l'étanchéité entre le corps de valve et la jante,
- un moyen de maintien en position du corps de valve sur la jante, préformée à cet effet d'un orifice de liaison,
- un module de liaison du boîtier de détection avec le corps de valve,
au moins un des éléments dudit montage, en dehors du moyen d'étanchéité, étant préformé de façon à ce qu'une partie de cet élément vienne pénétrer dans l'orifice de liaison afin d'y prendre, appui lorsque le montage est soumis à des contraintes tangentielles.

La demanderesse a constaté que ce type de montage avait pour inconvénient de nécessiter une valve spéciale adaptée au montage requis. Un autre inconvénient est que le boîtier électronique est rendu solidaire de la valve et ne peut être changé ou subir une opération de maintenance que si la valve elle-même est démontée de la jante.

### DESCRIPTION DE L'INVENTION

Partant de cet état de fait, la demanderesse a mené des recherches visant à fixer ce type de boîtier électronique sur des valves standards. Un autre objectif de ces recherches a été de rendre le boîtier électronique indépendant de la valve pour faciliter les opérations de maintenance ou de changement.

Ces recherches ont abouti à la conception et à la réalisation d'un dispositif de fixation sur jante d'un boîtier électronique de détection pour pneumatiques du type de celui venant se fixer à la valve laquelle comprend une partie à l'extérieur de la jante et une partie à l'intérieur de la jante, ledit dispositif étant constitué par un module de liaison lié d'une part à la partie intérieure de la valve et d'autre part à un réceptacle préformé pour accueillir ledit boîtier électronique, remarquable en ce que ledit réceptacle forme un volume d'accueil ouvert du côté de la bande roulante du pneumatique ce qui en facilite l'accès et le fonctionnement, tout en évitant la création d'une cage de faraday entre les parois de la jante et du réceptacle.

En outre, cette caractéristique est particulièrement avantageuse en ce qu'elle autorise l'utilisation d'une valve standard pour la fixation du boîtier. En outre, conformément aux objectifs de l'invention, le boîtier devient solidaire du seul réceptacle, ne participe plus à l'assemblage sur la jante et n'est plus fixé directement à la valve. Il n'est donc plus nécessaire de démonter la valve pour disposer du boîtier. Ainsi, seuls le réceptacle et le module de liaison sont susceptibles d'être modifiés selon les applications. La valve utilisée dans le dispositif de fixation de l'invention peut ainsi rester la valve d'origine.

Afin de faciliter l'amovibilité du boîtier par rapport à son réceptacle, ledit réceptacle et le boîtier sont préformés pour réaliser une liaison glissière.

La demanderesse a imaginé plusieurs configurations pour le dispositif de l'invention. Selon une première configuration, le module de liaison et le réceptacle sont réalisés dans une seule et même pièce. Selon un mode de réalisation non limitatif, ledit réceptacle est alors constitué par une feuille de métal préformée notamment d'une ouverture dans laquelle s'enfile la valve lors du montage, la tête de valve prenant appui sur les rebords de ladite ouverture. Cette ouverture constitue ledit module de liaison.

Selon une deuxième configuration, le module de liaison est constitué par un ou plusieurs éléments indépendants du réceptacle. Selon un mode de réalisation non limitatif, ledit module de liaison est alors constitué par un cylindre creux comportant un épaulement intérieur et un épaulement extérieur, la valve venant s'enfiler dans le cylindre et ladite tête de valve venant en appui sur l'épaulement intérieur à des fins de fixation de la pièce de liaison sur la jante, et le réceptacle venant s'enfiler sur le cylindre au moyen d'un orifice prévu à cet effet et venir en appui avec les rebords dudit orifice sur l'épaulement extérieur.

Selon un autre mode de réalisation de cette deuxième configuration, ledit module de liaison est notamment constitué par un écrou comportant un alésage fileté intérieur venant se visser sur la valve à des fins de fixation du module de liaison sur la jante ledit écrou étant préformé d'un épaulement extérieur, le réceptacle étant préformé d'un orifice dans lequel s'enfile l'écrou de façon à ce que l'épaulement extérieur prenne appui sur les rebords de l'orifice.

Selon une autre caractéristique particulièrement avantageuse, une bride de fixation vient se fixer au dit réceptacle pour garantir le maintien en position du boîtier.

Selon une autre caractéristique particulièrement avantageuse, le volume de boîtier est préformé sur son côté orienté vers la tête de valve de façon à adopter une forme en retrait pour libérer, une fois le boîtier mis en place, le volume autour de la tête de valve.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif conforme à l'invention.

### BRÈVE DESCRIPTION DES DESSINS

La figure 1 est un dessin schématique d'une vue en perspective éclatée d'un mode de réalisation du dispositif de l'invention,

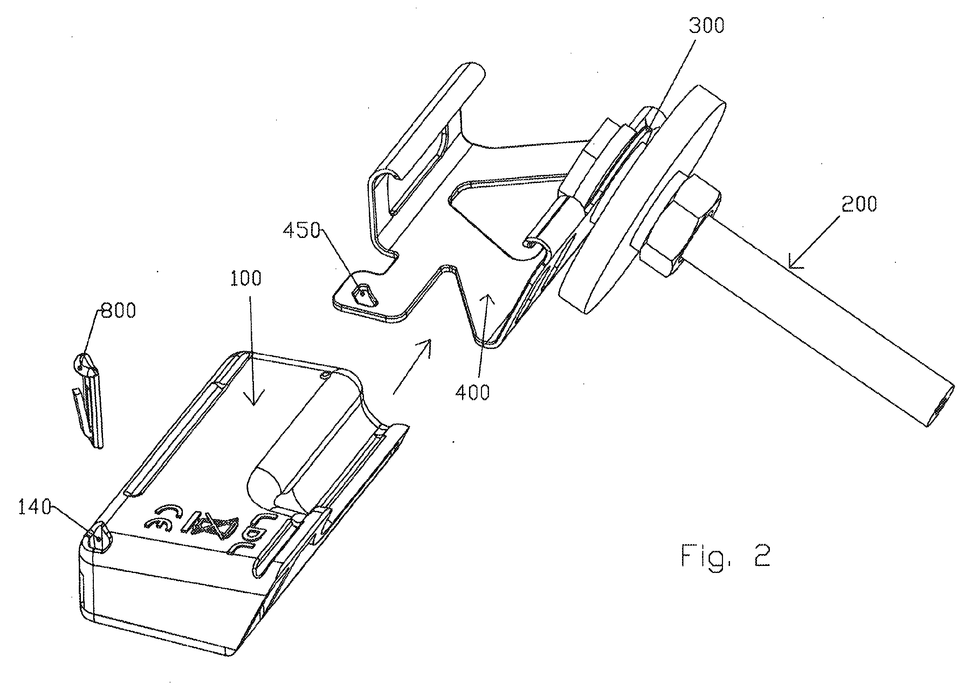

La figure 2 est un dessin schématique d'une vue en perspective du dispositif de la figure 1 montrant l'engagement du boîtier dans le réceptacle,

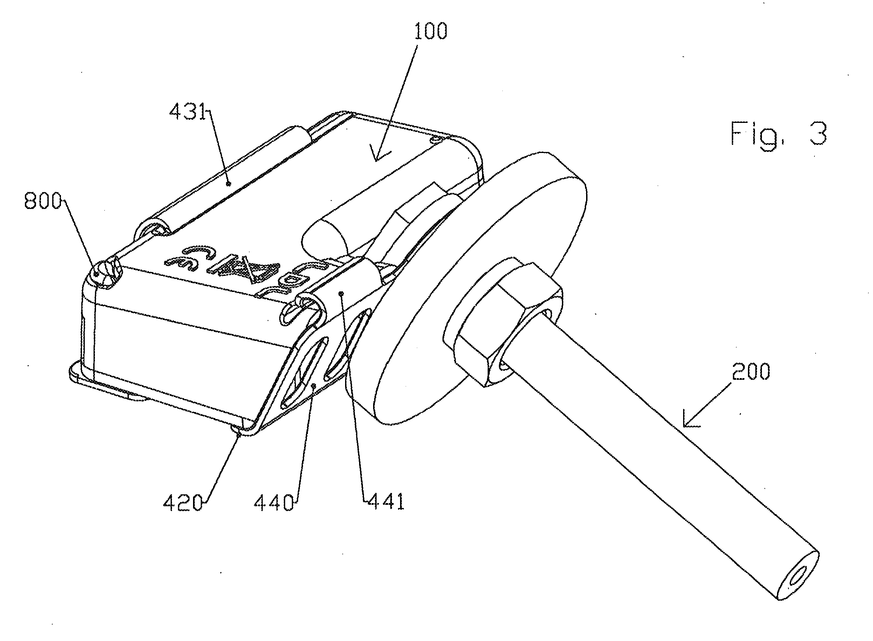

La figure 3 est un dessin schématique d'une vue en perspective du dispositif de la figure 1 montrant le boîtier positionné dans le réceptacle,

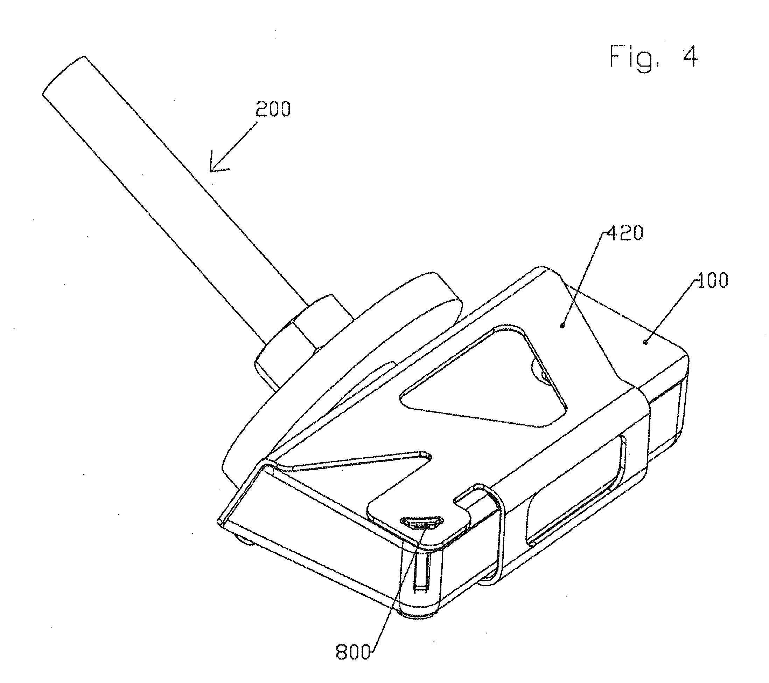

La figure 4 est un dessin schématique d'une vue en perspective par dessous du dispositif de la figure 1, le boîtier étant positionné dans le réceptacle,
La figure 5 est un dessin schématique d'une vue en coupe du dispositif de la figure 1,
La figure 6 est un dessin schématique d'une vue en coupe d'un autre mode de réalisation du dispositif de l'invention,
La figure 7 est un dessin schématique d'une vue en perspective éclatée d'un autre mode de réalisation du dispositif de l'invention,
La figure 8 est un dessin schématique d'une vue en coupe d'un autre mode de réalisation du dispositif de l'invention.

### DESCRIPTION DES MODES DE RÉALISATION PRÉFÉRÉS

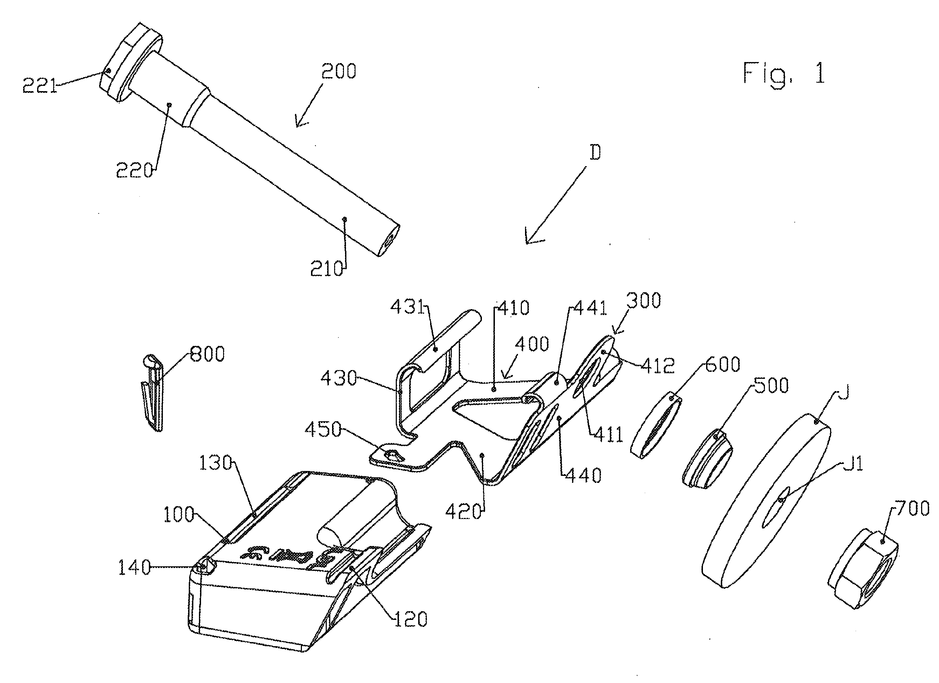

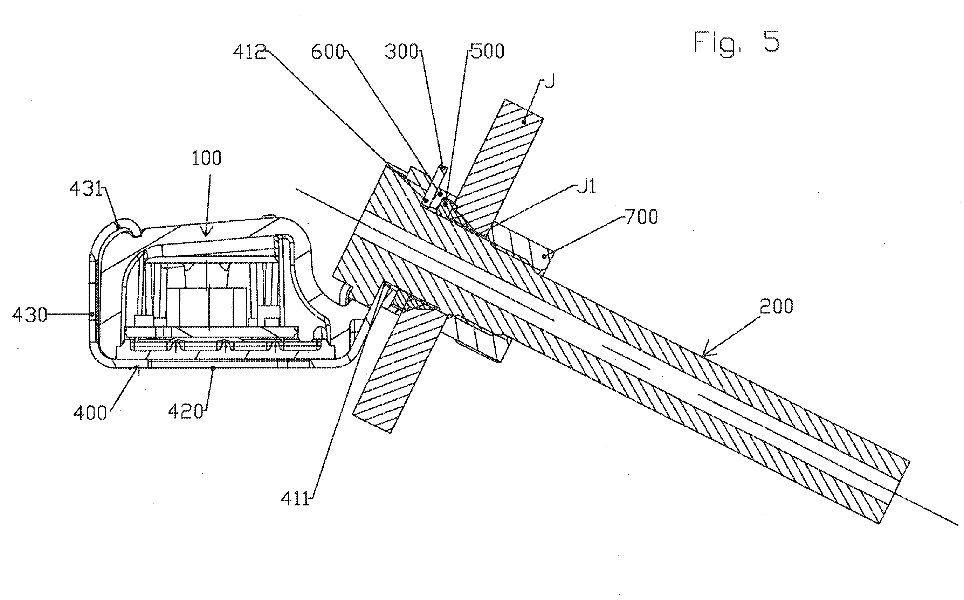

Tel qu'illustré sur le dessin des figures 1 et 5, le dispositif référencé D dans son ensemble assure la fixation sur jante J (modélisée ici partiellement par une rondelle) d'un boîtier électronique 100 de détection pour pneumatiques du type de celui venant se fixer à la valve 200 laquelle comprend, une fois mise en place, une partie 210 à l'extérieur de la jante et une partie 220 à l'intérieur de la jante comportant une tête 221.

Selon l'invention, le dispositif D est constitué par un module de liaison 300 lié d'une part, à la partie intérieure 220 de la valve 200 et d'autre part, à un réceptacle 400 préformé pour accueillir ledit boîtier électronique 100. Ainsi, le boîtier n'est pas directement lié à la valve ce qui autorise l'interchangeabilité dudit boîtier sans démontage de la valve.

Selon le mode de réalisation illustré, le dispositif comprend en outre un joint 500 associé à une rondelle creuse 600 qui viendra en appui J autour du trou de valve J1.

Comme illustré, ledit réceptacle 400 et le boîtier 100 sont préformés pour réaliser une liaison glissière.

Conformément à l'invention et selon le mode de réalisation illustré, ledit réceptacle 400 est constitué par une feuille de métal 410 préformée notamment d'une ouverture 411 dans laquelle s'enfile la valve 200 et sur les rebords 412 de laquelle la tête de valve 221 prend appui, ladite ouverture constituant ladite pièce de liaison 300. Selon le mode de réalisation illustré, l'ouverture 411 est un orifice pratiqué dans l'épaisseur de la feuille de métal 410 et situé de façon à ce que le rebord 412 l'entoure complètement.

Selon le mode de réalisation illustré, ladite feuille de métal 410 est ménagée d'une pluralité d'ouvertures afin d'alléger la structure qu'elle constitue, ce qui a pour avantage de diminuer les contraintes sur la valve 200.

Selon une caractéristique particulièrement avantageuse, l'épaisseur de la feuille de métal est suffisamment faible pour que le filetage utilisé classiquement pour le montage de la valve standard 200 puisse être utilisé. Ainsi, le dispositif de l'invention ne requiert aucune modification du montage existant sur une valve standard. En effet, comme illustrés sur le dessin des figures 1 et 5, les éléments du montage d'une valve standard 200 sont constitués par la valve 200 et par l'écrou 700, le dispositif D se contente de rajouter une épaisseur entre la surface intérieure de la jante J et la surface d'appui de la tête de valve 221. Cette épaisseur supplémentaire est constituée par la hauteur de la rondelle 600 et par l'épaisseur de la feuille de métal.

Malgré l'épaisseur réduite et les différentes ouvertures pratiquées dans la feuille métallique, le matériau du réceptacle ainsi constitué est sélectionné pour former un châssis rigide et non déformable pour accueillir le boîtier électronique.

Comme illustré, le volume de boîtier 100 est préformé sur le côté orienté vers la tête de valve 221 de façon à adopter une forme en retrait 110 pour éviter de former un obstacle à l'entrée ou à la sortie d'air issues de la tête 221 de la valve 200. Pour rendre complètement indépendant le boîtier 100 de la valve 200, ledit réceptacle 400 constitue une plate-forme d'appui 420 pour le boîtier 100, le plan de ladite plate-forme et le plan d'appui pour la tête 221 de valve proposé par la pièce de liaison 300 ainsi que leur éloignement respectif sont définis de façon à ce que la tête de valve 221 ne vienne pas en contact avec ledit boîtier 100.

Selon le mode de réalisation illustré, la feuille de métal constituant le réceptacle 100 comprend une partie centrale plane formant la plate-forme 420 sur deux cotés opposées de laquelle deux parties latérales 430 et 440 sensiblement planes s'élèvent pour former les côtés du réceptacle 400. Comme illustrées, les extrémités 431 et 441 desdits côtés 430 et 440 non liées à la plate-forme 420 sont préformées d'un retour intérieur pour former des volumes en retrait longitudinaux avec lesquels coopèrent les volumes en saillie 120 et 130 de la surface extérieure du boîtier pour former ladite liaison glissière.

Comme illustré par les dessins des figures, pour garantir le maintien en position du boîtier 100 dans le réceptacle 400, le boîtier et le réceptacle sont préformés chacun d'un orifice 140 et 450 venant en correspondance une fois le boîtier positionné dans le réceptacle et par lesquels vient se placer une goupille 800 de fixation. Cette goupille se clipse à l'intérieur de l'orifice 140 pratiqué dans le boîtier 100.

Selon un autre mode de réalisation non illustré, une autre solution pour bloquer en translation cette liaison glissière, consiste à préformer ledit réceptacle 100 sur sa face supérieure d'une forme en retrait avec laquelle coopère un ergot en saillie préformé sur la face inférieure du boîtier.

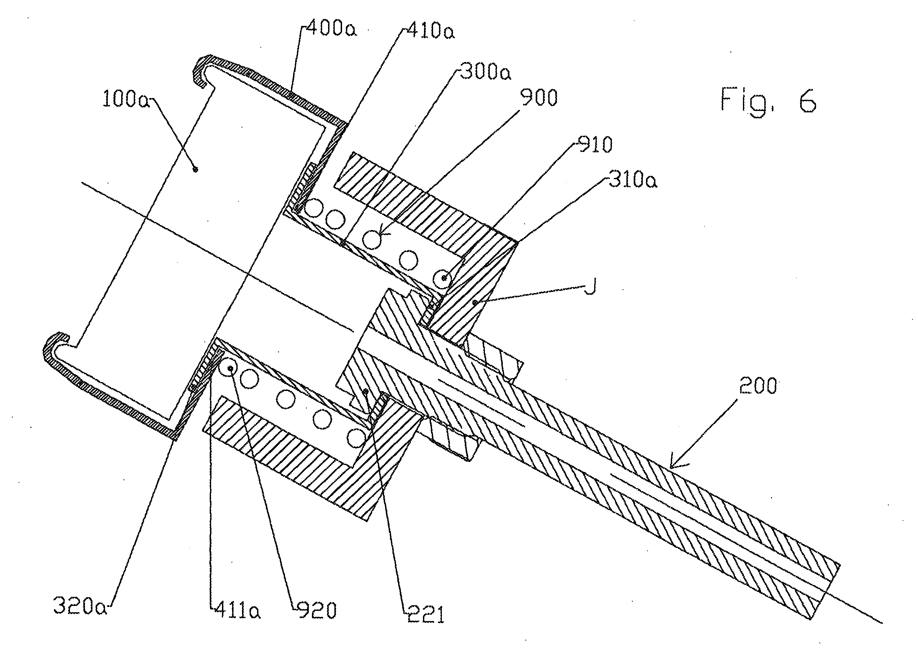

Selon le mode de réalisation non limitatif illustré par le dessin de la figure 6, ladite pièce de liaison 300a est une pièce indépendante du réceptacle et est constituée par un cylindre creux comportant un épaulement intérieur 310a et un épaulement extérieur 320a, la valve 200 venant s'enfiler dans le cylindre 300a et ladite tête de valve 221 venant en appui sur l'épaulement intérieur 310a à des fins de fixation de la pièce de liaison sur la jante J, et le réceptacle 400a venant s'enfiler sur le cylindre 300a au moyen d'un orifice 410a prévu à cet effet et venir en appui avec les rebords 411a dudit orifice 410a sur l'épaulement extérieur 320a. Le cylindre 300a peut alors coulisser dans le réceptacle 400a.

Comme illustré, un ressert de compression 900 positionné autour de la pièce de liaison 300a comprend une extrémité 910 venant en appui sur la jante. J et une extrémité 920 venant en appui sur le réceptacle 400a afin de maintenir en position le réceptacle 400a contre l'épaulement extérieur 411a.

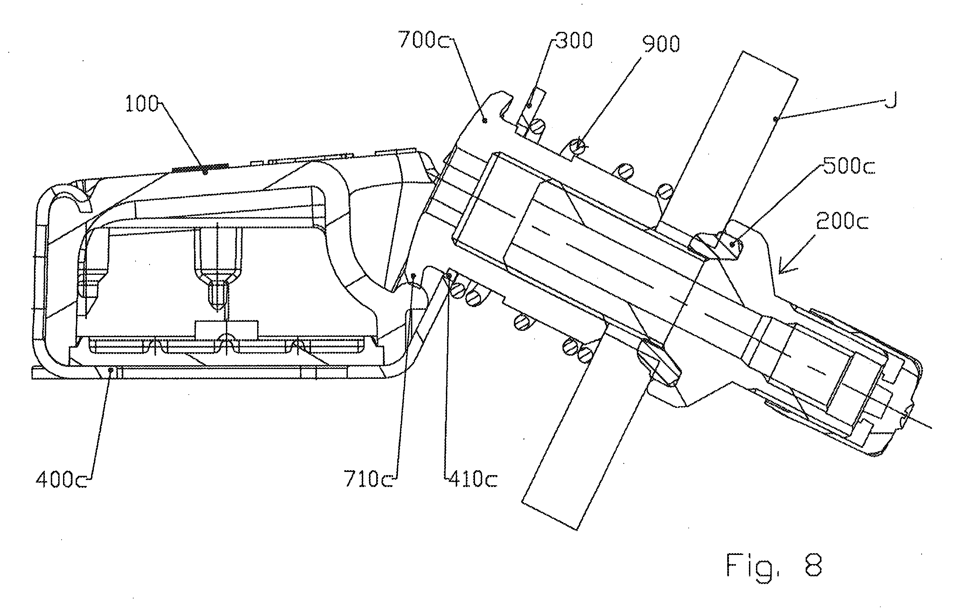

Le mode de réalisation illustré par le dessin de la figure 8 montre également une solution où le module de liaison constitue une pièce intermédiaire en étant notamment constitué par un écrou 700c comportant un alésage fileté intérieur venant se visser sur la valve 200c à des fins de fixation du module de liaison sur la jante J ledit écrou étant préformé d'un épaulement extérieur 710c, le réceptacle 400c étant préformé d'un orifice 410c dans lequel s'enfile l'écrou 700c de façon à ce que son épaulement extérieur 710c prenne appui sur les rebords de l'orifice 410c. Un ressort 900 vient, en s'appuyant sur la jante, maintenir le rebord de l'orifice 410c ménagé dans le réceptacle 400c contre l'épaulement extérieur de l'écrou 700c.

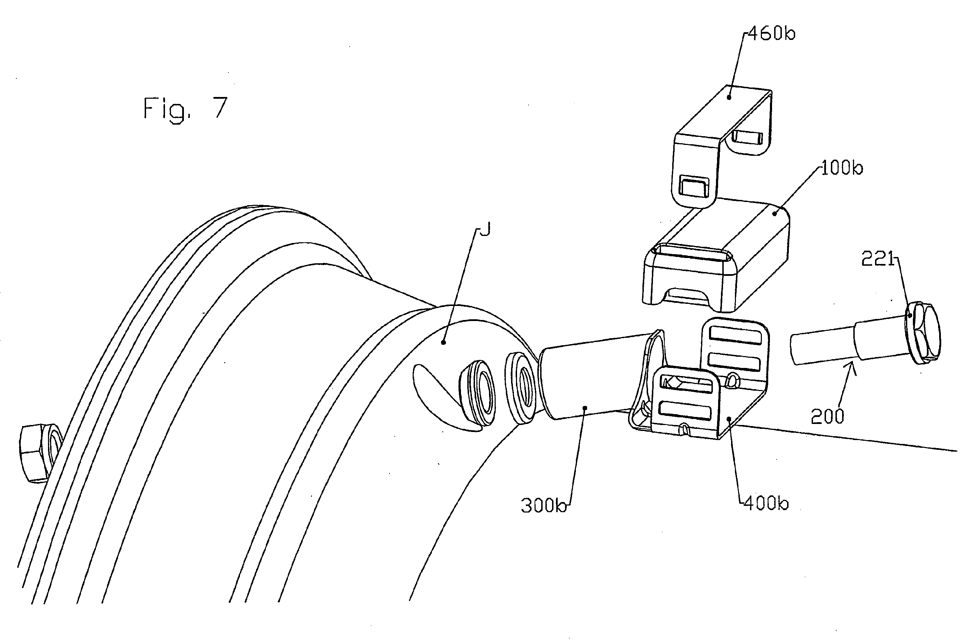

Le mode de réalisation illustré par le dessin de la figure 7 constitue une variante reprenant des caractéristiques du premier et du deuxième modes de réalisation. Dans ce mode de réalisation, la pièce de liaison 300b est solidaire du réceptacle 400b et est constitué par un cylindre creux comportant un épaulement intérieur non illustré, la valve 200 venant s'enfiler dans le cylindre 300b et ladite tête de valve 221 venant en appui sur l'épaulement intérieur à des fins de fixation de la pièce de liaison 300b sur la jante J.

Dans ce mode de réalisation et conformément à une caractéristique de l'invention, une bride 460b de fixation vient se fixer audit réceptacle 400b pour garantir le maintien en position du boîtier 100b dans le réceptacle 400b. La bride 460b vient se fixer par clipsage aux côtés du réceptacle 400b.

Selon l'ensemble des modes de réalisation, ledit réceptacle 400 forme un volume d'accueil ouvert du côté de la bande roulante du pneumatique.

## Revendications

1. Dispositif (D) de fixation sur jante (J) d'un boîtier (100) électronique de détection pour pneumatiques du type de celui venant se fixer à la valve (200) laquelle comprend une partie (210) à l'extérieur de la jante et une partie (220) à l'intérieur de la jante, ledit dispositif étant constitué par un module de liaison (300) lié d'une part à la partie intérieure (220) de la valve (200) et d'autre part à un réceptacle (400) préformé pour accueillir ledit boîtier électronique (100) **CARACTÉRISÉ PAR LE FAIT QUE** ledit réceptacle (400, 400a, 400b) forme un volume d'accueil ouvert du côté de la bande roulante du pneumatique.

2. Dispositif (D) selon la revendication 1, **CARACTÉRISÉ PAR LE FAIT QUE** ledit réceptacle (400) et le boîtier (100) sont préformés pour réaliser une liaison glissière.

3. Dispositif (D) selon la revendication 1, où la valve comporte une tête (221), **CARACTÉRISÉ PAR LE FAIT QUE** ledit réceptacle (400) est constitué par une feuille de métal (410) préformée d'une ouverture (411) dans laquelle s'enfile la valve (200) et sur les rebords (412) de laquelle la tête de valve (221) prend appui, ladite ouverture (411) constituant ledit module de liaison (300).

4. Dispositif (D) selon la revendication 1, **CARACTÉRISÉ PAR LE FAIT QUE** ledit module de liaison (300a) est constitué par un cylindre creux comportant un épaulement intérieur (310a) et un épaulement extérieur (320a), la valve (200) venant s'enfiler dans le cylindre (300a) et ladite tête de valve (221) venant en appui sur l'épaulement intérieur (310a) à des fins de fixation de la pièce de liaison (300a) sur la jante (J), et le réceptacle (400a) venant s'enfiler sur le cylindre (300a) au moyen d'un orifice (410a) prévu à cet effet et venir en appui avec les rebords (411a) dudit orifice (410a) sur l'épaulement extérieur (320a).

5. Dispositif (D) selon la revendication 1, **CARACTÉRISÉ PAR LE FAIT QUE** ledit module de liaison (300a) est constitué par un écrou (700c) comportant un alésage fileté intérieur venant se visser sur la valve (200c) à des fins de fixation du module de liaison sur la jante J ledit écrou étant préformé d'un épaulement extérieur (710c), le réceptacle 400c étant préformé d'un orifice (410c) dans lequel s'enfile l'écrou (700c) de façon à ce que son épaulement extérieur (710c) prenne appui sur les rebords de l'orifice (410c).

6. Dispositif (D) selon les revendications 4 et 5, **CARACTÉRISÉ PAR LE FAIT QU'**un ressort de compression (900a) comprend une extrémité (910a) venant en appui sur la jante (J) et une extrémité (920a) venant en appui sur le réceptacle (400a) afin de maintenir en position le réceptacle (400a) contre l'épaulement extérieur (320a).

7. Dispositif (D) selon la revendication 1, **CARACTÉRISÉ PAR LE FAIT QUE** ledit réceptacle (400) constitue une plate-forme d'appui (430) pour le boîtier (100), le plan de ladite plate-forme (420) et le plan d'appui pour la tête de valve (221) proposée par la pièce de liaison (300) ainsi que leur éloignement respectif sont définis de façon à ce que la tête de valve (221) ne vienne pas en contact avec ledit boîtier (100).

8. Dispositif (D) selon la revendication 1, **CARACTÉRISÉ PAR LE FAIT QUE** le volume de boîtier (100) est préformé sur le côté orienté vers la tête de valve (221) de façon à adopter une forme en retrait (110) pour éviter de former un obstacle à l'entrée ou à la sortie d'air issues de la tête de valve (221).

9. Dispositif (D) selon la revendication 1, **CARACTÉRISÉ PAR LE FAIT QUE** le boîtier (100) et le réceptacle (400) sont préformés chacun d'un orifice (140 et 450) venant en correspondance une fois le boîtier positionné dans le réceptacle et par lesquels vient se placer une goupille (800) de fixation.

## Claims

1. Device (D) for the attachment on a rim (J) of an electronic detection housing (100) for tyres of the type attached to the valve (200) which comprises one part (210) outside the rim and one part (220) inside the rim, said device consisting of a connection module (300) connected, on one hand, to the inner part (220) of the valve (200) and, on the other, to a receptacle (400) preformed to receive said electronic housing (100), **characterised in that** said receptacle (400, 400a, 400b) forms a reception volume open on the side of the tyre tread.

2. Device (D) according to claim 1, **characterised in that** said receptacle (400) and the housing (100) are preformed to produce a sliding joint.

3. Device (D) according to claim 1, wherein the valve comprises a head (221), **characterised in that** said receptacle (400) consists of a sheet of metal (410) preformed with an opening (411) therein the valve (200) is inserted and on the edges (412) whereof the valve head (221) rests, said opening (411) forming said connection module (300).

4. Device (D) according to claim 1, **characterised in that** said connection module (300a) consists of a hollow cylinder comprising an inner shoulder (310a) and an outer shoulder (320a), the valve (200) being inserted in the cylinder (300a) and said valve head (221) resting on the inner shoulder (310a) for the purposes of attaching the connection part (300a) on the rim (J), and the receptacle (400a) being engaged on the cylinder (300a) by means of an orifice (410a) provided for this purpose and resting with the edges (411a) of said orifice (410a) on the outer shoulder (320a).

5. Device (D) according to claim 1, **characterised in that** said connection module (300a) consists of a nut (700c) comprising an inner threaded bore screwed onto the valve (200c) for the purposes of attaching the connection module on the rim (J), said nut being preformed with an outer shoulder (710c), the receptacle (400c) being preformed with an orifice (410c) wherein the nut (700c) is inserted such that the outer shoulder (710c) rests on the edges of the orifice (410c).

6. Device (D) according to claims 4 and 5, **characterised in that** a compression spring (900a) comprises one end (910a) resting on the rim (J) and one end (920a) resting on the receptacle (400a) so as to hold the receptacle (400a) in position against the outer shoulder (320a).

7. Device (D) according to claim 1, **characterised in that** said receptacle (400) forms a bearing platform (430) for the housing (100), the surface of said platform (420) and the bearing surface for the valve head (221) proposed by the connection part (300) and the respective distance thereof are defined such that the valve head (221) does not come into contact with said housing (100).

8. Device (D) according to claim 1, **characterised in that** the housing (100) volume is preformed on the side thereof oriented towards the valve head (221) so as to adopt an offset shape (110) to prevent the formation of an obstacle at the air inlet or outlet from the valve head (221).

9. Device (D) according to claim 1, **characterised in that** the housing (100) and the receptacle (400) are each preformed with an orifice (140 and 450) corresponding once the housing is positioned in the receptacle and whereby an attachment pin (800) is positioned.

## Patentansprüche

1. Vorrichtung (D) zum Befestigen an einer Felge (J) eines elektronischen Detektionsgehäuses (100) für Luftreifen, von der Art, die an dem Ventil (200) befestigt wird, das einen Teil (210) außerhalb der Felge und einen Teil (220) innerhalb der Felge umfasst, wobei die Vorrichtung aus einem Verbindungsmodul (300) besteht, das einerseits mit dem Innenteil (220) des Ventils (200) und andererseits mit einem Aufnahmebehältnis (400) verbunden ist, das vorgeformt ist, um das Elektrenikgehäuse (100) aufzunehmen, **dadurch gekennzeichnet, dass** das Aufnahmebehältnis (400, 400a, 400b) ein Aufnahmevolumen bildet, das auf der Seite der Lauffläche des Luftreifens offen ist.

2. Vorrichtung (D) nach Anspruch 1, **dadurch gekennzeichnet, dass** das Aufnahmebehältnis (400) und das Gehäuse e (100) vorgeformt sind, um eine Gleitschienenverbindung auszubilden.

3. Vorrichtung (D) nach Anspruch 1, wobei das Ventil einen Kopf (221) umfasst, **dadurch gekennzeichnet, dass** das Aufnahmebehältnis (400) aus einer Metallfolie (410) besteht, die mit einer Öffnung (411) vorgeformt ist, in die das Ventil (200) eingeführt wird, und auf deren Rändern (412) sich der Ventilkopf (221) abstützt, wobei die Öffnung (411) das Verbindungsmodul (300) bildet.

4. Vorrichtung (D) nach Anspruch 1, **dadurch gekennzeichnet, dass** das verbindungsmodul (300a) aus einem Hohlzylinder besteht, der eine Innenschulter (310a) und eine Außenschulter (320a) umfasst, wobei das Ventil (200) in den Zylinder (300a) eingeführt wird und der Ventilkopf (221) sich auf der Innenschulter (310a) zum Befestigen des Verbindungsstücks (300a) an der Felge (J) abstützt, und wobei das Aufnahmebehältnis (400a) mittels einer dazu vorgesehenen Öffnung (410a) auf den Zylinder (300a) geschoben wird und sich mit den Rändern (411a) der Öffnung (410a) an der Außenschulter (320a) abstützt.

5. Vorrichtung (D) nach Anspruch 1, **dadurch gekennzeichnet, dass** das Verbindungsmodul (300a) aus einer Muster (700c) besteht, die eine Innengewindebohrung umfasst, die auf das Ventil (200c) aufgeschraubt wird zum Befestigen des Verbindungsmoduls an der Felge (J), wobei die Mutter mit einer Außenschulter (710c) vorgeformt ist, wobei das Aufnahmebehältnis (400c) mit einer Offnung (410c) vorgeformt ist, in welche die Mutter (700c) eingeführt wird, so dass ihre Außenschulter (710c) sich an den Rändern der Öffnung (410c) abstützt.

6. Vorrichtung (D) nach Anspruch 4 und 5, **dadurch gekennzeichnet, dass** eine Druckfeder (900a) ein Ende (910a) umfasst, das sich an der Felge (J) abstützt, und ein Ende (920a) umfasst, das sich an dem Aufnahmebehältnis (400a) abstützt, um das Aufnahmebehältnis (400a) an der Außenschulter (320a) festzuhalten.

7. Vorrichtung (D) nach Anspruch 1, **dadurch gekennzeichnet, dass** das Aufnahmebehältnis (400) eine Stützplattform (430) für das Gehäuse (100) bildet, wobei die Ebene der Plattform (420) und die Stützebene für den Ventilkopf (221), die von dem Verbindungsstück (300) angeboten wird, so wie ihre jeweilige Entfernung derart definiert sind, dass der Ventilkopf (221) nicht mit dem Gehäuse (100) in Berührung kommt.

8. Vorrichtung (D) nach Anspruch 1, **dadurch gekennzeichnet, dass** das Volumen des Gehäuses (100) vorgeformt ist auf der Seite, die zum Ventilkopf (221) orientiert ist, um eine zurückgesetzte Form (110) anzunehmen, um für den Ein- oder Ausgang von Luft in bzw. aus dem Ventilkopf (221) keine Behinderung darzustellen.

9. Vorrichtung (D) nach Anspruch 1, **dadurch gekennzeichnet, dass** das Gehäuse (100) und das Aufnahmebehältnis (400) jeweils mit einer Öffnung (140 und 450) vorgeformt sind, die sich entsprechen, sobald das Gehäuse in dem Aufnahmebehältnis positioniert ist, und durch die ein Befestigungsstift (800) angeordnet wird.
